# EUROPÄISCHE PATENTSCHRIFT

(11) **EP 0 591 701 B1**
(45) Veröffentlichungstag und Bekanntmachung des Hinweises auf die Patenterteilung: **11.06.1997**
(21) Anmeldenummer: 93114549.4
(22) Anmeldetag: 10.09.1993
(51) Int. Cl.: B60R 16/02

(54) **Bedienvorrichtung für elektrische Verbraucher, wie Blinker, Scheinwerfer, Scheibenwischer od. dgl. in einem Fahrzeug**
Control device for electrical users, like signal lights, head lights, windscreen wipers, or the like, in a vehicle
Dispositif de commande pour consommateurs électiques, comme clignoteurs, phares, essuie-glaces, ou similaire dans un véhicule

(30) Priorität: 08.10.1992 DE 4233865
(43) Veröffentlichungstag der Anmeldung: 13.04.1994
(73) Patentinhaber: ROBERT BOSCH GMBH, 70442 Stuttgart (DE)
(72) Erfinder: Weigold, Thomas, Dipl.-Ing. (FH), D-76534 Baden-Baden (DE)

(56) Entgegenhaltungen:
- EP-A- 0 376 056
- GB-A- 2 110 891
- US-A- 4 045 667
- I MECH E, 1985, USA Seiten 209 - 217 JOHNSON ET AL. 'SYSTEMS CONSIDERATIONS FOR INCORPORATING VEHICLE DATA NETWORKS INTO AUTOMOBILES'
- AUTOMOBILELEKTRONIK, Bd.38, Nr.17, 18. August 1989, MÜNCHEN, DE Seiten 93 - 96, XP000048711 SCHWAIGER ET AL. 'DIE VIELFALT DER DATEN BÜNDELN'
- IEEE TRANSACTIONS ON INDUSTRIAL ELECTRONICS, Bd.32, Nr.4, November 1985, NEW YORK , USA Seiten 334 - 338 FLOYD 'A MICROPROCESSOR - BASED SERIAL MULTIPLEX SYSTEM IS COMBINED WITH SIMPLE MOMENTARY SWITCHES TO PROVIDE ERGONOMICALLY IMPROVED DRIVER INPUT CONTROLS FOR TRADITIONAL BODY ELECTRICAL FUNTIONS'

## Beschreibung

### Stand der Technik

Die Erfindung betrifft eine Bedienvorrichtung für elektrische Verbraucher, wie Blinker, Scheinwerfer, Scheibenwischer od.dgl., in einem Fahrzeug, mit einem seriellen Bussystem und mit peripheren Busstationen, die Schnittstellen zwischen den seriellen Busleitungen des Bussystems einerseits und der wenigstens einen Bedienvorrichtung sowie den Verbrauchern andererseits bilden.

Ein serielles Bussystem zur Ansteuerung von Verbrauchern in einem Kraftfahrzeug ist beispielsweise aus der US-PS 46 54 655 bekannt. Dort steuert ein zentraler Buscontroller eine Vielzahl von über periphere Busstationen an die Busleitung angeschlossene Verbraucher und erhält Steuersignale für die Verbraucher über ebenfalls an solche Busstationen angeschlossene Steuerelemente, wie Schalter od.dgl. In herkömmlicher Weise sind an der Lenksäule von Kraftfahrzeugen Bedienhebel angeordnet, die eine Vielzahl von mechanischen Schaltern aufweisen, die durch Schwenken des Hebels in zwei senkrecht aufeinanderstehenden Ebenen, Drücken des Hebels in Richtung seiner Längsachse, stufenweises Drehen des Endbereichs des Hebels u.dgl. betätigt werden. Da mit diesem multifunktionellen Bedienungshebel möglichst viele Schaltfunktionen für Blinker, Scheinwerfer, Scheibenwischer, Waschanlage, Hupe od.dgl. ausgeführt werden sollen, wird die mechanische und elektrische Konstruktion dieses Bedienhebels sehr aufwendig und teuer. Häufig werden nun beim Einbau eines seriellen Bussystems in ein Fahrzeug die herkömmlichen Bedienelemente und Bedienhebel beibehalten, die den Möglichkeiten eines seriellen Bussystems nur in ungenügender Weise Rechnung tragen und daher die elektrische Anordnung unnötig verteuern.

### Vorteile der Erfindung

Die erfindungsgemäße Bedienvorrichtung mit den Merkmalen des Hauptanspruchs hat den Vorteil, daß bei multifunktioneller Ausführung keinerlei mechanisch bewegbare Teile erforderlich sind, so daß durch den Wegfall der aufwendigen Mechanik gegenüber den bisherigen Lösungen nicht nur eine deutliche Kostenersparnis sondern auch ein weitgehend verschleißfreier Aufbau erreicht werden kann. Die interne Verdrahtung ist sehr einfach, und als äußere Verdrahtung sind neben den Busleitungen lediglich Versorgungsleitungen für die Elektronik erforderlich. Hierdurch wird eine optimale Anpassung an ein serielles Bussystem erreicht. An eine solche Bedienvorrichtung können gegenüber herkömmlichen Ausführungen eine größere Anzahl von Schaltern oder Einstellelementen angeordnet werden. Das Design ist nicht mehr an konstruktive Erfordernisse gebunden, so daß den designerischen Gestaltungsmöglichkeiten praktisch keine Begrenzungen mehr gesetzt sind.

Durch die in den Unteransprüchen aufgeführten Maßnahmen sind vorteilhafte Weiterbildungen und Verbesserungen der im Hauptanspruch angegebenen Bedienvorrichtung möglich.

Das erfindungsgemäße Bedienelement ist zweckmäßigerweise als Bedienhebel ausgebildet, der insbesondere an der Lenksäule oder deren Verkleidung angeordnet ist, so daß der Fahrzeugbenutzer wieder im wesentlichen die ihm gewohnte Anordnung vorfindet, wobei allerdings nunmehr eine noch größere Zahl von Funktionen in diesem Bedienhebel enthalten sein kann.

Die Sensor-Schalt- und/oder Steuerelemente sind vorzugsweise am Endbereich des als Bedienhebel ausgebildeten Bedienelements angeordnet, um z.B. bei der Anordnung an der Lenksäule einen ergonomischen Zugriff zu erreichen. Dabei sind diese Sensor-Schalt- und/oder Steuerelemente vorzugsweise an wenigstens zwei Seiten des im wesentlichen eine langgestreckte Quaderform aufweisenden Bedienelements angeordnet, vorzugsweise an den beiden am besten zugänglichen Seiten. Selbstverständlich können auch alle Seiten mit solchen Sensorelementen versehen sein, wobei weniger oft benötigte Sensorelemente an den schwerer zugänglichen Stellen angeordnet sein können. Geeignet zur Anbringung solcher Sensorelemente ist auch die freie Stirnseite des Bedienelements.

Die Sensor-Schalt- und/oder Steuerelemente sind vorzugsweise als Sensor-Tastschalter ausgebildet, wobei die periphere Busstation zweckmäßigerweise ein Schnittstellenmodul und eine Auswerteelektronik für die Sensorelemente aufweist. Diese Auswerteelektronik bestimmt dann im einzelnen, wobei ein angeschlossener Sensor-Tastschalter lediglich einen Schaltvorgang, z.B. das Einschalten eines Zwischenmotors, ausführen soll, oder ob dieser Sensor-Tastschalter nach Art eines Berührungs-Dimmerschalters während der Betätigung eine Helligkeitsveränderung einer Glühbirne oder eine Drehzahlveränderung des Motors bewirkt.

### Zeichnung

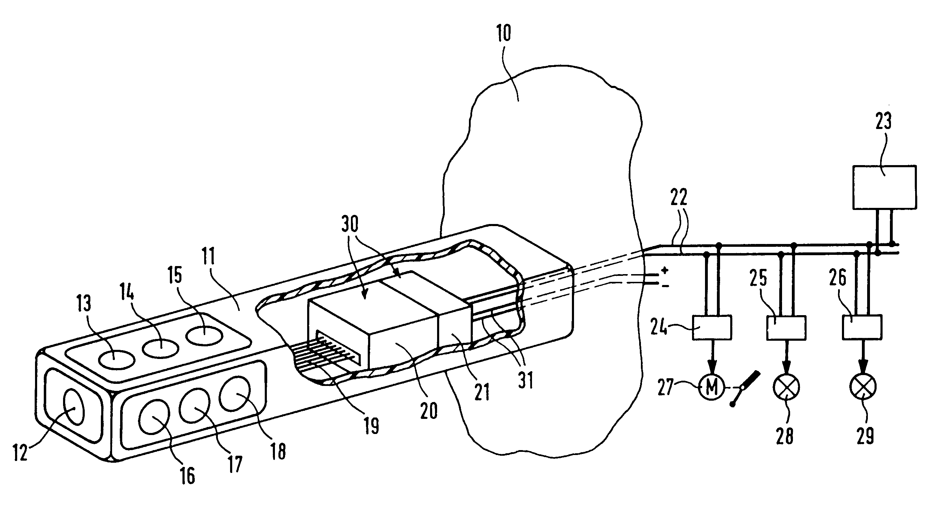

Ein Ausführungsbeispiel der Erfindung ist in der Zeichnung dargestellt und in der nachfolgenden Beschreibung näher erläutert. Die einzige Figur zeigt eine als Bedienhebel ausgebildete Bedienvorrichtung in einer perspektivischen Ansicht, zum Teil aufgeschnitten, sowie eine schematische Darstellung des seriellen Bussystems.

### Beschreibung des Ausführungsbeispieles

An einer nur schematisch als Ausschnitt dargestellten Verkleidung 10 einer Lenksäule eines Kraftfahrzeugs ist im wesentlichen horizontal ein Bedienhebel 11 zum Schalten von Verbrauchern des Kraftfahrzeugs, wie Blinkern, Scheinwerfern, Scheibenwischern, Heckscheibenheizung, Lüftung, Hupe, Spritz- und Reinigungsanlage für Scheiben und Scheinwerfer u.dgl. angeordnet. Dieser Bedienhebel 11 weist an seiner freien Stirnseite ein Sensor-Element 12, an der oberen Fläche drei Sensorelemente 13 bis 15 und an der dem Fahrer zugewandten Vorderseite ebenfalls drei Sensor-Elemente 16 bis 18 auf. Der Bedienhebel 11 ist im wesentlichen quaderförmig ausgebildet, kann jedoch selbstverständlich auch ein anderes Design aufweisen, z.B. auch einen runden, dreieckigen oder mehreckigen Querschnitt aufweisen. Die Sensor-Elemente 12 bis 18 sind am freien Endbereich dieses Bedienhebels 11 angeordnet, so daß der mittlere und verkleidungsnahe Bereich 10 beispielsweise auch einen geringeren Querschnitt aufweisen kann, sofern die noch zu beschreibenden Elemente im Inneren entsprechend angeordnet werden.

Die Sensor-Elemente 12 bis 18 sind als Sensor-Tastschalter ausgebildet und über Leitungen 19 mit einer Auswerteelektronik 20 verbunden, diese ist mit einem Schnittstellenmodul 21 als Schnittstelle zu einem seriellen Bussystem verbunden, wobei das Schnittstellenmodul 21 zusammen mit der Auswerteelektronik 20 eine periphere Busstation für das serielle Bussystem darstellt.

Das serielle Bussystem weist serielle Busleitungen 22 auf, an die neben dem Schnittstellenmodul 21 ein Bus-Controller 23 sowie weitere periphere Busstationen 24 bis 26 angeschlossen sind. Ein derartiges Bussystem ist im eingangs angegebenen Stand der Technik beschrieben, wobei beispielsweise auch das an sich bekannte CAN-Bussystem und entsprechende CAN-Schnittstellenbausteine (SLIO CAN) verwendet werden können.

An die Busstationen 24 bis 26 sind ein Verbraucher, ein Wischermotor 27, eine Blinkerbirne 28 und eine Scheinwerfer-Birne 29 angeschlossen. Selbstverständlich können noch weitere Verbraucher an diesen Busleitungen 22 angeschlossen sein, sowie auch weitere Bedienelemente.

Durch den Bus-Controller 23 wird das Bussystem verwaltet, d.h., der Zustand der Busstationen wird über entsprechende Adressen abgefragt, und wenn beispielsweise Einschaltsignale für einen bestimmten Verbraucher an der durch die Auswertelektronik 20 und das Schnittstellenmodul 21 gebildeten Busstation 30 anliegen, so wird die dem betreffenden Verbraucher zugeordnete Busstation über deren Adresse angesprochen und ein Einschaltbefehl für den jeweiligen Verbraucher übermittelt. Dieser Vorgang wiederholt sich so lange, bis der Schaltbefehl durch Loslassen des entsprechenden Sensor-Elements, durch wiederholtes Betätigen desselben Sensor-Elements oder durch Betätigung eines den Ausschaltbefehl gebenden Sensor-Elements aufgehoben wird, so daß der Verbraucher abgeschaltet wird.

Die Sensor-Elemente 12 bis 18 sind als Sensor-Tastschalter ausgebildet, deren Steuersignale der Auswerteelektronik 20 zugeführt wird. In dieser Auswerteelektronik wird das jeweilige Signal eines Sensor-Tastschalters als Einschaltbefehl, als Ausschaltbefehl oder abwechselnd als Ein- und Ausschaltbefehl registriert und entsprechend aufbereitet. Weiterhin kann ein derartiges Sensorsignals auch die Veränderung einer Steuergröße veranlassen, z.B. als Art eines Dimmers um beispielsweise die Drehzahl oder die Intervallschaltung des Wischermotors 27 so lange in einer Richtung zu verändern, so lange das jeweilige Sensor-Element betätigt ist oder beispielsweise um die Helligkeit der Armaturenbeleuchtung zu verändern. Die jeweils aufbereiteten Schaltbefehle liegen am Schnittstellenmodul 21 an und werden durch zyklische Abfragen seitens des Bus-Controllers 23 in entsprechende Schaltbefehle für die zugeordnete Verbraucherbusstation umgesetzt, oder bei einer Ausbildung als aktive Busstation kann die Busstation 30 von sich aus einen Steuerbefehl bzw. ein Busprotokoll auf den Bus geben, gegebenenfalls aus einer Wartestellung heraus.

Die Auswerteelektronik 20 und das Schnittstellenmodul 21 werden über Versorgungsleitungen 31 mit der notwendigen Betriebsspannung versehen. Diese Versorgungsleitungen 31 können zusammen mit den Busleitungen 22 verlegt sein, also parallel zu diesen verlaufen. Diese Versorgungsleitungen 31 können auch Beleuchtungselemente für die Sensor-Elemente 12 bis 18 versorgen, um diese bei Dunkelheit besser erkennen zu können. Diese nicht dargestellten Beleuchtungselemente können ebenfalls über das Bussystem gesteuert werden, wobei in diesem Falle die Busstation 30 als kombinierte Sensor-Verbrauchersteuerstation ausgebildet sein muß.

## Patentansprüche

1. Bedienvorrichtung für elektrische Verbraucher, wie Blinker (28), Scheinwerfer (29), Scheibenwischer (27), in einem Fahrzeug, mit einem seriellen Bussystem und mit peripheren Busstationen (24, 25, 26, 30), die Schnittstellen zwischen seriellen Busleitungen (22) des Bussystems einerseits und der wenigstens einen Bedienvorrichtung sowie den Verbrauchern (27, 28, 29) andererseits bilden, dadurch gekennzeichnet, daß die Bedienvorrichtung als Bedienelement (11) ausgebildet ist, das die zugeordnete periphere Busstation (30) sowie wenigstens ein daran angeschlossenes Sensor-Tastelement (12 - 18) enthält.

2. Bedienvorrichtung nach Anspruch 1, dadurch gekennzeichnet, daß das Bedienelement (11) als Bedienhebel ausgebildet ist.

3. Bedienvorrichtung nach Anspruch 2, dadurch gekennzeichnet, daß das Bedienelement (11) an der Lenksäule oder deren Verkleidung (10) angeordnet ist.

4. Bedienvorrichtung nach einem der vorhergehenden Ansprüche, dadurch gekennzeichnet, daß die Sensor-Tastschalter (12 - 18) am Endbereich des als Bedienhebel ausgebildeten Bedienelements (11) angeordnet sind.

5. Bedienvorrichtung nach Anspruch 4, dadurch gekennzeichnet, daß die Sensor-Tastschalter (12 - 18) an wenigstens zwei Seiten des im wesentlichen eine langgestreckte Quaderform aufweisenden Bedienelements (11) angeordnet sind.

6. Bedienvorrichtung nach Anspruch 5, dadurch gekennzeichnet, daß wenigstens ein Sensor-Tastschalter (12 - 18) an der freien Stirnseite des Bedienelements (11) angeordnet ist.

7. Bedienvorrichtung nach einem der vorhergehenden Ansprüche, dadurch gekennzeichnet, daß die periphere Busstation (30) ein Schnittstellenmodul (21) und eine Auswerteelektronik (20) für die Sensor-Tastschalter (12 - 18) aufweist.

## Claims

1. Control device for electrical loads, such as direction indicator lights (28), headlights (29), windscreen wipers (27), in a vehicle, having a serial bus system and having peripheral bus stations (24, 25, 26, 30) which form interfaces between serial bus lines (22) of the bus system, on the one hand and the at least one control device and the loads (27, 28, 29), on the other, characterized in that the control device is constructed as a control element (11) which contains the assigned peripheral bus station (30) and at least one sensor element (12-18) connected thereto.

2. Control device according to Claim 1, characterized in that the control element (11) is constructed as a control lever.

3. Control device according to Claim 2, characterized in that the control element (11) is arranged on the steering column or its casing (10).

4. Control device according to one of the preceding claims, characterized in that the sensor switches (12-18) are arranged on the end region of the control element (11) which is constructed as a control lever.

5. Control device according to Claim 4, characterized in that the sensor switches (12-18) are arranged on at least two sides of the control element (11) which is essentially in the shape an elongated parallelepiped.

6. Control device according to Claim 5, characterized in that at least one sensor switch (12-18) is arranged on the free end side of the control element (11).

7. Control device according to one of the preceding claims, characterized in that the peripheral bus station (30) has an interface module (21) and evaluation electronics (20) for the sensor switches (12-18).

## Revendications

1. Dispositif de commande de consommateurs électriques tels que des clignotants (28), des projecteurs (29), des essuie-glaces (27) d'un véhicule à l'aide d'un système de bus série et de stations de bus périphériques (24, 25, 26, 30) formant les interfaces, d'une part, entre les lignes de bus série (22) du système de bus, et, d'autre part, entre au moins un dispositif de commande et les utilisateurs (27, 28, 29),
caractérisé en ce que
le dispositif de commande est en forme d'élément de commande (11) contenant la station de bus périphérique (30) associée ainsi qu'au moins un élément de commande sensitif (12-18) raccordé.

2. Dispositif de commande selon la revendication 1,
caractérisé en ce que
l'élément de commande (11) est en forme de levier de commande.

3. Dispositif de commande selon la revendication 2,
caractérisé en ce que
l'élément de commande (11) est monté sur la colonne de direction ou sur son habillage (10).

4. Dispositif de commande selon l'une des revendications précédentes,
caractérisé en ce que
les touches de commande sensitives (12-18) sont prévues dans la zone d'extrémité de l'élément de commande (11) en forme de levier de commande.

5. Dispositif de commande selon la revendication 4,
caractérisé en ce que
les interrupteurs sensitifs (12-18) sont prévus au moins sur deux côtés de l'élément de commande (11) ayant essentiellement une forme de parallélépipède rectangle allongé.

6. Dispositif de commande selon la revendication 5,
caractérisé en ce qu'
au moins un interrupteur sensitif (12-18) est prévu sur la face frontale libre de l'élément de commande (11).

7. Dispositif de commande selon l'une des revendications précédentes,
caractérisé en ce que
la station de bus périphérique (30) comporte un module d'interface (21) et un circuit électronique d'exploitation (20) pour l'interrupteur sensitif (12-18).
